# EUROPEAN PATENT APPLICATION

(11) **EP 4 808 166 A1**
(43) Date of publication of application: **16.09.2026**
(21) Application number: 25767257.6
(22) Date of filing: 27.02.2025
(51) Int. Cl.: H04W 4/029, H04W 4/40, G07C 9/00

(54) **VEHICLE CONTROL METHOD AND APPARATUS, AND TERMINAL DEVICE AND STORAGE MEDIUM**

(30) Priority: 07.03.2024 CN 202410261758
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310000 (CN)
(72) Inventor: HUANG, Guanming, Ningbo, Zhejiang 315899 (CN); SHANG, Xin, Ningbo, Zhejiang 315899 (CN)
(74) Representative: Murgitroyd & Company
(86) International application number: PCT/CN2025/079632
(87) International publication number: WO 2025/185518

(57) **Abstract**

Disclosed in the present application are a vehicle control method and apparatus, and a terminal device and a storage medium. The method comprises: acquiring a user location trajectory of a predefined user outside a vehicle; performing intention recognition on the basis of a pre-trained intention recognition model and on the basis of the user location trajectory, so as to acquire an intention recognition result, wherein the intention recognition model is obtained by means of model training based on a pre-acquired historical user trajectory set and historical user behavior set; and controlling the vehicle on the basis of the intention recognition result.

## Description

### RELATED APPLICATIONS

This disclosure claims priority to Chinese Patent Application No. 202410261758.4, filed March 7, 2024, the entire contents of which are incorporated herein by reference.

### TECHNICAL FIELD

This disclosure relates to the field of Internet of Vehicles technologies, and in particular, to a vehicle control method and apparatus, a terminal device, and a storage medium.

### BACKGROUND

While advancing automobile product upgrades, the Internet of Vehicles drives the evolution of automobiles from mere means of transport to intelligent terminals equipped with capabilities of interaction and service. Typically, technologies such as Bluetooth, Radio Frequency or Infrared are employed to seamlessly control vehicles to unlock and open the trunk.

However, current vehicle control is limited to unlocking by signal sensing and identity recognition within a range, and does not provide seamless control adapted to user requirements, resulting in poor user experience.

The above content is only used to assist in understanding the technical solutions of the present disclosure, and does not mean that the above content is acknowledged as the prior art.

### SUMMARY

### TECHNICAL PROBLEM

The present disclosure mainly provides a vehicle control method and apparatus, a terminal device, and a storage medium, to solve the problem of poor user experience resulting from vehicle control that does not adapt to user intention.

### TECHNICAL SOLUTIONS

To achieve the above objectives, this disclosure provides a vehicle control method, where the vehicle control method includes:
acquiring a user position trajectory of a predefined user outside a vehicle;
performing, based on a pre-trained intent recognition model, intent recognition according to the user position trajectory, to obtain an intent recognition result, where the intent recognition model is obtained by performing model training based on a pre-obtained historical user trajectory set and a pre-obtained historical user behavior set; and
performing vehicle control based on the intent recognition result.

In an embodiment, before the performing, based on the pre-trained intent recognition model, the intent recognition according to the user position trajectory, to obtain the intent recognition result, the method further includes:
constructing an initial intent recognition model based on a predefined intent recognition algorithm; and
performing the model training on the initial intent recognition model based on the pre-obtained historical user trajectory set and the pre-obtained historical user behavior set, to obtain the intent recognition model.

In an embodiment, the performing the model training on the initial intent recognition model based on the pre-obtained historical user trajectory set and the pre-obtained historical user behavior set, to obtain the intent recognition model includes:
constructing a behavior region map set based on the pre-obtained historical user trajectory set and the pre-obtained historical user behavior set; and
inputting the behavior region map set into the initial intent recognition model for the model training to obtain the intent recognition model.

In an embodiment, the constructing the behavior region map set based on the pre-obtained historical user trajectory set and the pre-obtained historical user behavior set includes:
obtaining user behavior types based on the pre-obtained historical user behavior set;
classifying the pre-obtained historical user trajectory set based on the user behavior types to obtain a behavior trajectory set;
performing region calibration based on the behavior trajectory set to obtain a behavior region set; and
mapping the behavior region set to a predefined vehicle perception map to obtain the behavior region map set.

In an embodiment, the performing, based on the pre-trained intent recognition model, the intent recognition according to the user position trajectory, to obtain the intent recognition result includes:
obtaining, based on a predefined behavior region map, a user position set according to the user position trajectory; and
inputting the user position set into the intent recognition model for the intent recognition to obtain the intent recognition result.

In an embodiment, the inputting the user position set into the intent recognition model for the intent recognition to obtain the intent recognition result includes:
inputting the user position set into the intent recognition model for:
obtaining a current position point and a previous position point based on the user position set;
obtaining a current behavior type and a previous behavior type based on behavior types corresponding to the current position point and the previous position point in the predefined behavior region map; and
in response to the current behavior type being consistent with the previous behavior type and dwell time at the current position point exceeding a predefined time threshold, obtaining the current behavior recognition type as the intent recognition result.

In an embodiment, the vehicle control method further includes:
performing user identity recognition by using a predefined sensor to obtain a user identity recognition result;
where in response to the user identity recognition result being a first predefined user, the vehicle control at least comprises one or more of: turning on a vehicle-finding indicator light, unlocking a vehicle door, and opening a trunk;
in response to the user identity recognition result being a second predefined user, the vehicle control at least comprises unlocking a passenger door.

An embodiment of the present disclosure further provides a vehicle control apparatus, where the vehicle control apparatus includes:
an acquiring module, configured to acquire a user position trajectory of a predefined user outside a vehicle;
a recognition module, configured to perform, based on a pre-trained intent recognition model, intent recognition according to the user position trajectory, to obtain an intent recognition result, where the intent recognition model is obtained by performing model training based on a pre-obtained historical user trajectory set and a pre-obtained historical user behavior set; and
a control module, configured to perform vehicle control based on the intent recognition result.

An embodiment of the present disclosure further provides a terminal device, including: one or more memories, one or more processors, and a vehicle control program stored on the one or more memories and executable on the one or more processors, when the vehicle control program is executed by the one or more processors, the steps of the vehicle control method described above are implemented.

An embodiment of the present disclosure further provides a computer-readable storage medium storing a vehicle control program, when the vehicle control program is executed by one or more processors, the steps of the vehicle control method described above are implemented.

### BENEFICIAL EFFECTS

The vehicle control method, apparatus, terminal device and storage medium are provided in embodiments of the present disclosure. A user position trajectory of a predefined user outside a vehicle is acquired. Based on a pre-trained intent recognition model, intent recognition is performed according to the user position trajectory, to obtain an intent recognition result. Where the intent recognition model is obtained by performing model training based on a pre-obtained historical user trajectory set and a pre-obtained historical user behavior set. Vehicle control is performed based on the intent recognition result. In the present disclosure, the user position trajectory of the predefined user outside the vehicle is acquired, the intent recognition is performed based on the user position trajectory by using the intent recognition model, and then the vehicle control is performed by using the intent recognition result. This solution realizes a seamless vehicle control for user intention, solves the problem of poor user experience resulting from vehicle control that does not adapt to user intention, and the problem of poor accuracy and convenience of the seamless vehicle control, and improves the accuracy and convenience of the seamless vehicle control.

### BRIEF DESCRIPTION OF DRAWINGS

FIG. 1 is a schematic diagram of functional modules of a terminal device to which a vehicle control apparatus belongs according to the present disclosure.
FIG. 2 is a schematic flowchart of a vehicle control method according to a first exemplary embodiment of the present disclosure.
FIG. 3 is a schematic flowchart of a vehicle control method according to a second exemplary embodiment of the present disclosure.
FIG. 4 is a schematic diagram of an example of a historical behavior trajectory of a vehicle control method according to the present disclosure.
FIG. 5 is a schematic diagram of an example of classification of behavior regions of a vehicle control method according to the present disclosure.
FIG. 6 is a schematic diagram of an example of a behavior region map of a vehicle control method according to the present disclosure.
FIG. 7 is a schematic flowchart of a vehicle control method according to a third exemplary embodiment of the present disclosure.
FIG. 8 is a schematic flowchart of a vehicle control method according to a fourth exemplary embodiment of the present disclosure.

The realization, functional features and advantages of the object of the present disclosure will be further described with reference to the embodiments and the accompanying drawings.

### DETAILED DESCRIPTION

It should be understood that the specific embodiments described herein are only used to explain the present disclosure and are not intended to limit the present disclosure.

The main solution of the embodiment of the present disclosure is as follows: acquiring a user position trajectory of a predefined user outside a vehicle; performing, based on a pre-trained intent recognition model, intent recognition according to the user position trajectory, to obtain an intent recognition result, where the intent recognition model is obtained by performing model training based on a pre-obtained historical user trajectory set and a pre-obtained historical user behavior set; and performing vehicle control based on the intent recognition result. In the present disclosure, the user position trajectory of the predefined user outside the vehicle is acquired, the intent recognition is performed based on the user position trajectory by using the intent recognition model, and then the vehicle control is performed by using the intent recognition result. This solution realizes a seamless vehicle control for the user intention solves the problem of poor user experience resulting from vehicle control that does not adapt to user intention, and the problem of poor accuracy and convenience of the seamless vehicle control, and improves the accuracy and convenience of the seamless vehicle control.

In this embodiment of the present disclosure, it is considered that in related technical solutions, seamless vehicle control is performed by using a device or a key having functions such as Bluetooth and radio frequency, but the seamless vehicle control in the prior art is limited to unlocking a vehicle door when a user approaches the vehicle, and the vehicle senses an unlocking signal such as Bluetooth and radio frequency. And the seamless vehicle control in the prior art is not controlled with reference to user requirements.

Based on this, the embodiments of the present disclosure provide a solution, in which vehicle control is more deeply integrated with user requirements through machine learning, data analysis, and the like, to provide users with more personalized services and experiences. The user requirements are intelligently recognized and the corresponding vehicle control operations are automatically performed, thereby further improving user satisfaction and use convenience.

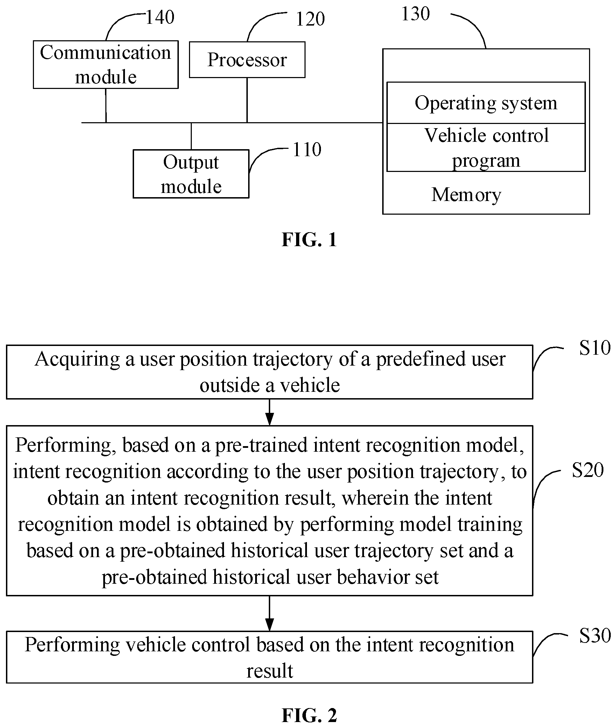

In particular, referring to FIG. 1, which is a schematic diagram of functional modules of a terminal device to which a vehicle control apparatus belongs according to the present disclosure. The vehicle control apparatus may be an apparatus that is independent of the terminal device and that can perform vehicle control, and may be carried on the terminal device in a form of hardware or software. The terminal device may be an intelligent mobile device having a vehicle control function, such as a mobile phone or a tablet computer, or may be a fixed terminal device or a server having the vehicle control function.

In this embodiment, the terminal device to which the vehicle control apparatus belongs at least includes an output module 110, a processor 120, a memory 130, and a communication module 140.

The memory 130 stores an operating system and a vehicle control program. The vehicle control apparatus may store the received data information and processed data information in the memory 130. The output module 110 may be a display screen, a speaker, etc. The communication module 140 may include a WIFI module, a mobile communication module, a Bluetooth module, and the like. The terminal device communicates with an external device or a server through the communication module 140.

The vehicle control program in the memory 130, when executed by the processor, implements the following steps.

A user position trajectory of a predefined user outside a vehicle is acquired.

Based on a pre-trained intent recognition model, intent recognition is performed according to the user position trajectory, to obtain an intent recognition result. Where the intent recognition model is obtained by performing model training based on a pre-obtained historical user trajectory set and a pre-obtained historical user behavior set.

Vehicle control is performed based on the intent recognition result.

Additionally, the vehicle control program in the memory 130, when executed by the processor, further implements the following steps.

An initial intent recognition model is constructed based on a predefined intent recognition algorithm.

The model training is performed on the initial intent recognition model based on the pre-obtained historical user trajectory set and the pre-obtained historical user behavior set, to obtain the intent recognition model.

Additionally, the vehicle control program in the memory 130, when executed by the processor, further implements the following steps.

A behavior region map set is constructed based on the pre-obtained historical user trajectory set and the pre-obtained historical user behavior set.

The behavior region map set is input into the initial intent recognition model for the model training to obtain the intent recognition model.

Additionally, the vehicle control program in the memory 130, when executed by the processor, further implements the following steps.

User behavior types are obtained based on the pre-obtained historical user behavior set.

The pre-obtained historical user trajectory set is classified based on the user behavior types to obtain a behavior trajectory set.

Region calibration is performed based on the behavior trajectory set to obtain a behavior region set.

The behavior region set is mapped to a predefined vehicle perception map to obtain the behavior region map set.

Additionally, the vehicle control program in the memory 130, when executed by the processor, further implements the following steps.

Based on a predefined behavior region map, a user position set is obtained according to the user position trajectory.

The user position set is input into the intent recognition model for the intent recognition to obtain the intent recognition result.

Additionally, the vehicle control program in the memory 130, when executed by the processor, further implements the following steps.

The user position set is input into the intent recognition model for processing as follows.

A current position point and a previous position point are obtained based on the user position set.

A current behavior type and a previous behavior type are obtained based on behavior types corresponding to the current position point and the previous position point in the predefined behavior region map.

In response to the current behavior type being consistent with the previous behavior type and dwell time at the current position point exceeding a predefined time threshold, the current behavior recognition type is obtained as the intent recognition result.

Additionally, the vehicle control program in the memory 130, when executed by the processor, further implements the following steps.

User identity recognition is performed by using a predefined sensor to obtain a user identity recognition result.

Where in response to the user identity recognition result being a first predefined user, the vehicle control at least comprises one or more of: turning on a vehicle-finding indicator light, unlocking a vehicle door, and opening a trunk.

In response to the user identity recognition result being a second predefined user, the vehicle control at least comprises unlocking a passenger door.

In this embodiment, through the foregoing solution, a user position trajectory of a predefined user outside a vehicle is acquired; based on a pre-trained intent recognition model, intent recognition is performed according to the user position trajectory, to obtain an intent recognition result, where the intent recognition model is obtained by performing model training based on a pre-obtained historical user trajectory set and a pre-obtained historical user behavior set; and vehicle control is performed based on the intent recognition result. In the present disclosure, the user position trajectory of the predefined user outside the vehicle is acquired, the intent recognition is performed based on the user position trajectory by using the intent recognition model, and then the vehicle control is performed by using the intent recognition result. This solution realizes a seamless vehicle control for the user intention, solves the problem of poor user experience resulting from vehicle control that does not adapt to user intention, and the problem of poor accuracy and convenience of the seamless vehicle control, and improves the accuracy and convenience of the seamless vehicle control.

Based on the foregoing architecture of the terminal device but not limited to the foregoing architecture, the method embodiments of the present disclosure are provided.

Referring to FIG. 2, which is a schematic flowchart of a vehicle control method according to a first exemplary embodiment of the present disclosure. The vehicle control method includes S10 to S30.

S10, a user position trajectory of a predefined user outside a vehicle is acquired.

In this embodiment, the method may be performed by a vehicle control apparatus, or may be performed by a vehicle control terminal device or a server. This embodiment uses the vehicle control apparatus for example. And the vehicle control apparatus may be integrated into a terminal device having a data processing function.

The user position trajectory of a predefined user outside a vehicle is acquired. Position trajectory data of a user outside the vehicle transmitted by a device, such as a smartphone, another wearable device, or a vehicle key that has a signal transmitting and receiving capability (including but not limited to Bluetooth, infrared, and wireless radio frequency) may be acquired by a built-in sensor of the vehicle, for example, real-time position information of an authorized user device outside the vehicle is obtained by a vehicle Bluetooth sensor, to form the user position trajectory. The positioning information of an authorized user outside the vehicle may also be acquired through Internet of Vehicles, to form the user position trajectory.

S20, based on a pre-trained intent recognition model, intent recognition is performed according to the user position trajectory, to obtain an intent recognition result, where the intent recognition model is obtained by performing model training based on a pre-obtained historical user trajectory set and a pre-obtained historical user behavior set.

Using the position trajectory of the user outside the vehicle as a basis for intent recognition, the intent recognition is performed by using the pre-trained intent recognition model to obtain the intent recognition result. The pre-trained intent recognition model may determine the purpose and intention of the current user behavior through statistical relationships between user behavior patterns and behavior features in a historical data set based on the machine learning algorithm. A result output by the model may be used as an input of a vehicle control system, to help the vehicle control system better understand the user intention, thereby providing more intelligent and personalized automobile service experience. The intent recognition model analyzes these trajectory data, and recognizes a possible behavior intention of the user, for example, whether the user is ready to return to the vehicle, and whether the vehicle needs to be unlock or the trunk needs to be opened.

S30, vehicle control is performed based on the intent recognition result.

The system performs a corresponding seamless vehicle control operation based on the intent recognition result, for example, turning on a vehicle-finding indicator light, unlocking the vehicle, and opening the trunk, to meet requirements of the user. The seamless vehicle control operation includes the follows.
1. Turning on the vehicle-finding indicator light: if the user intention to return to the vehicle is recognized, the vehicle-finding indicator light of the vehicle can be turned on through remote control, to help the user quickly find his own vehicle.
2. Unlocking the vehicle: if it is recognized that the user needs to unlock the vehicle, the vehicle can be unlocked in a remote control manner, so that the user can conveniently enter the vehicle.
3. Opening the trunk: if it is recognized that the user needs to open the trunk, the trunk of the vehicle can be remotely controlled to be opened, which is convenient for the user to store or retrieve items.

Through the seamless vehicle control operation, the user can control the vehicle without manual operation, and enjoy more intelligent and convenient automobile use experience.

In this embodiment, through the foregoing solution, a user position trajectory of a predefined user outside a vehicle is acquired; based on a pre-trained intent recognition model, intent recognition is performed according to the user position trajectory, to obtain an intent recognition result, where the intent recognition model is obtained by performing model training based on a pre-obtained historical user trajectory set and a pre-obtained historical user behavior set; and vehicle control is performed based on the intent recognition result. In the present disclosure, the user position trajectory of the predefined user outside the vehicle is acquired, the intent recognition is performed based on the user position trajectory by using the intent recognition model, and then the vehicle control is performed by using the intent recognition result. This solution realizes the seamless vehicle control for the user intention, solves the problem of poor user experience resulting from vehicle control that does not adapt to user intention, and the problem of poor accuracy and convenience of the seamless vehicle control, and improves the accuracy and convenience of the seamless vehicle control.

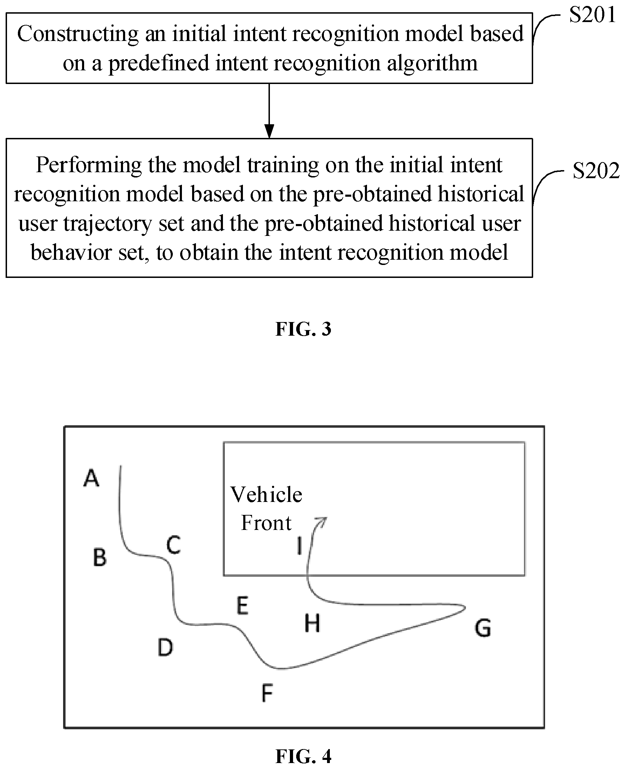

Referring to FIG. 3, which is a schematic flowchart of a vehicle control method according to a second exemplary embodiment of the present disclosure.

Based on the first embodiment, a second embodiment of the present disclosure is provided, and the second embodiment of the present disclosure differs from the first embodiment in the following.

In this embodiment, before the performing, based on the pre-trained intent recognition model, the intent recognition according to the user position trajectory, to obtain the intent recognition result, the method further includes S201 and S202.

S201, an initial intent recognition model is constructed based on a predefined intent recognition algorithm.

S202, the model training is performed on the initial intent recognition model based on the pre-obtained historical user trajectory set and the pre-obtained historical user behavior set, to obtain the intent recognition model.

In particular, first, the initial intent recognition model is constructed based on an intent recognition algorithm. The intent recognition algorithm is, for example, a machine learning-based classification algorithm (such as a decision tree, a support vector machine, or a neural network), or the initial intent recognition model is a deep learning-based model (such as a recurrent neural network or a convolutional neural network). The initial model is constructed based on requirements of the algorithm. The initial intent recognition model is required to use data such as the user position trajectory as model input data for the intent recognition, to obtain a model output result that can be used for vehicle control.

Finally, an existing data set, i.e., historical user trajectory data and historical user behavior data, is used as a training data set. The model training is performed by inputting the training data set into the intent recognition model, to finally obtain the intent recognition model. The training process can help the model learn the statistical relationships between the user behavior patterns and the behavior features from historical data, so that the intention of the user can be better recognized.

Additionally, as an implementation, the performing the model training on the initial intent recognition model based on the pre-obtained historical user trajectory set and the pre-obtained historical user behavior set, to obtain the intent recognition model includes S2021 and S2022.

S2021, a behavior region map set is constructed based on the pre-obtained historical user trajectory set and the pre-obtained historical user behavior set.

S2022, the behavior region map set is input into the initial intent recognition model for the model training to obtain the intent recognition model.

In particular, first, the behavior region map set is constructed based on the pre-obtained historical user trajectory set and the pre-obtained historical user behavior set. In the specific construction process of the behavior region map set, it is necessary to process the historical user trajectory data, divide the historical position trajectory of the user into different regions, and associate each region with the specific behavior of the user, such as finding the vehicle, unlocking the vehicle, opening the trunk, etc., so as to construct the behavior region map set, where each region corresponds to a specific behavior type.

Finally, the behavior region map set is input into the initial intent recognition model for the model training to obtain the intent recognition model. The behavior region map set is used as the training data, and is input into the initial intent recognition model for the model training. For different behavior types, different algorithms and model structures may be used for training, to obtain an optimal intent recognition effect. Through model training, an accurate and reliable intent recognition model is obtained, which can be applied to real-time user data, accurately recognize and predict the user's behavior intention, and improve the intelligence degree and accuracy of the vehicle control.

Additionally, as an implementation, the constructing the behavior region map set based on the pre-obtained historical user trajectory set and the pre-obtained historical user behavior set includes S20211 to S20214.

S20211, user behavior types are obtained based on the pre-obtained historical user behavior set.

S20212, the pre-obtained historical user trajectory set is classified based on the user behavior types to obtain a behavior trajectory set.

S20213, region calibration is performed based on the behavior trajectory set to obtain a behavior region set.

S20214, the behavior region set is mapped to a predefined vehicle perception map to obtain the behavior region map set.

In particular, first, the historical user behavior data is processed to recognize a specific behavior type performed by each user, such as finding the vehicle, unlocking the vehicle, opening the trunk, etc.

Then, the pre-obtained historical user trajectory set is classified based on the user behavior types to obtain the behavior trajectory set. The historical user trajectory data needs to be processed, and the moving trajectories of the user are classified based on different behavior types to obtain a corresponding behavior trajectory set.

Then, region calibration is performed based on the behavior trajectory set to obtain the behavior region set. The region calibration needs to be performed on the behavior trajectory set. The trajectory data of each behavior type is divided into different regions, and each region is associated with a corresponding behavior type, to obtain a behavior region set in which regions are associated with corresponding behaviors.

Finally, the behavior region set is mapped to a predefined vehicle perception map to obtain the behavior region map set. The behavior region set needs to be mapped to a map where the vehicle can perceive the position of the user, to obtain the behavior region map set. In the mapping process, the scale and precision of the vehicle perception map need to be considered to ensure that the behavior region map can accurately reflect the actual position of the vehicle and the behavior trajectory of the user.

More specifically, the system will track the position change curve of each point located around the vehicle based on the user key, and record the dwell time and operation of each point (such as finding the vehicle, unlocking the vehicle, opening the trunk, etc.).

As shown in FIG. 4, which is a schematic diagram of an example of a historical behavior trajectory of a vehicle control method according to the present disclosure. The curve in the FIG. 4 is a behavior trajectory curve of the user, where positions A-C may be classified as a vehicle-finding intention, a corresponding control that the vehicle should perform is turning on the vehicle-finding indicator light, positions of D-I may be classified as an unlocking intention, and a corresponding control that the vehicle should perform is unlocking the vehicle door.

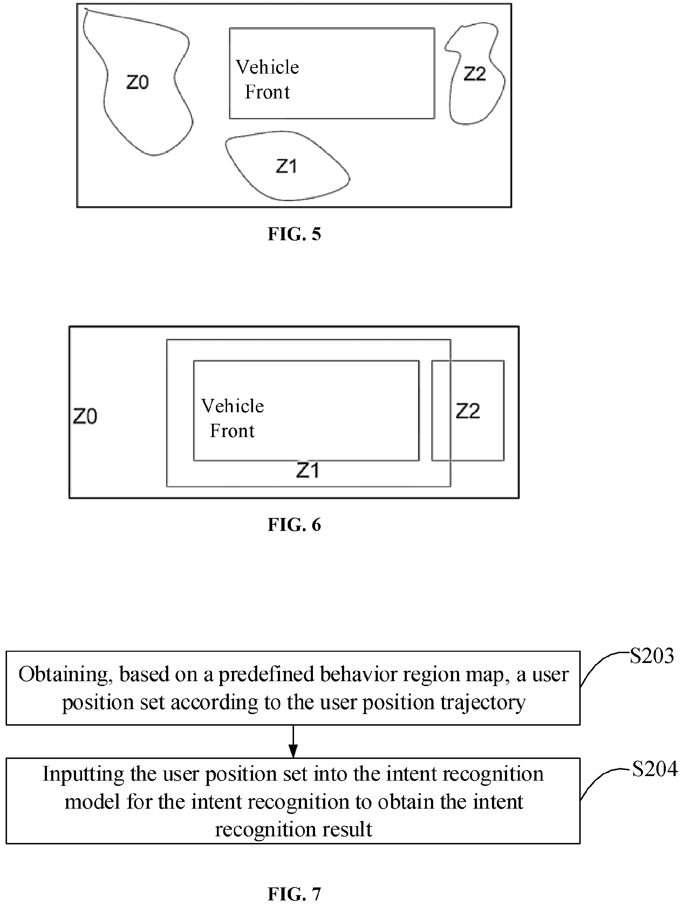

As shown in FIG. 5, which is a schematic diagram of an example of classification of behavior regions of a vehicle control method according to the present disclosure. The region calibration is performed based on the behavior trajectory set, to obtain that the region Z0 corresponding to A-C can be calibrated as the behavior region of the vehicle-finding intention, and obtain that the region Z1 corresponding to D-I (excluding G) can be calibrated as the behavior region of the unlocking intention, and the region Z2 is calibrated as the behavior region of the trunk opening intention.

As shown in FIG. 6, which is a schematic diagram of an example of a behavior region map of a vehicle control method according to the present disclosure. After multiple calibration of the behavior region, the finally obtained behavior region set is mapped to the predefined vehicle perception map to obtain the final behavior region map set.

In this embodiment, through the foregoing solution, the initial intent recognition model is constructed based on the predefined intent recognition algorithm; and the model training is performed on the initial intent recognition model based on the pre-obtained historical user trajectory set and the pre-obtained historical user behavior set, to obtain the intent recognition model. The trained intent recognition model may be applied to real-time user data, accurately recognize and predict the behavior intention of the user, and provide better user experience and vehicle control services.

Referring to FIG. 7, which is a schematic flowchart of a vehicle control method according to a third exemplary embodiment of the present disclosure.

Based on the first embodiment, a third embodiment of the present disclosure is provided, and the third embodiment of the present disclosure differs from the first embodiment in the following.

In this embodiment, the performing, based on the pre-trained intent recognition model, the intent recognition according to the user position trajectory, to obtain the intent recognition result includes S203 and S204.

S203, based on a predefined behavior region map, a user position set is obtained according to the user position trajectory.

S204, the user position set is input into the intent recognition model for the intent recognition to obtain the intent recognition result.

In particular, first, by using the actual position trajectory data of the user and in combination with a pre-constructed behavior region map, the user position trajectory is mapped to corresponding behavior regions, to obtain position information of the user in different behavior regions, to form the user position set.

Finally, the pre-trained intent recognition model is used. The user position set is used as an input. The behavior intention of the user is recognized through an inference process of the model to obtain the intent recognition result. The intent recognition model may determine the intention of the user based on the position information of the user in different behavior regions, that is, determine a specific behavior type that the user may perform (such as finding the vehicle, unlocking the vehicle, and opening the trunk), to obtain the intent recognition result. A specific recognition process of the intent recognition model may be: forming a continuous position trajectory curve based on position points in the user position set, and recognizing, by using a specific recognition algorithm (such as curve fitting, least square method, and the like), whether the curve conforms to a characteristic position curve of a specific behavior intention, to obtain the intent recognition result. In addition, the specific recognition process of the intent recognition model may also be to further determine associations between different position points based on the attribute features of the position points in the user position set, including but not limited to attributes such as time and direction, and then recognize the user intention to obtain the intent recognition result.

Additionally, as an implementation, the inputting the user position set into the intent recognition model for the intent recognition to obtain the intent recognition result includes the follows.

The user position set is input into the intent recognition model for processing as follows.

S2041, a current position point and a previous position point are obtained based on the user position set.

S2042, a current behavior type and a previous behavior type are obtained based on behavior types corresponding to the current position point and the previous position point in the predefined behavior region map.

S2043, in response to the current behavior type being consistent with the previous behavior type and dwell time at the current position point exceeding a predefined time threshold, the current behavior recognition type is obtained as the intent recognition result.

In particular, first, the latest two adjacent position points, i.e. the current position point and the previous position point, are obtained based on a time sequence of the user position set. The user position set is a position data set arranged in a time sequence. The model may perform user intent recognition based on the latest two position points.

Then, the current behavior type and the previous behavior type are obtained based on behavior types corresponding to the current position point and the previous position point in the predefined behavior region map. The current position point and the previous position point need to be mapped to the predefined behavior region map, to obtain behavior types corresponding to different location points. By comparing the current behavior type with the previous behavior type, it can be determined whether the behavior intention of the user has changed.

Finally, in response to the current behavior type being consistent with the previous behavior type and the dwell time at the current position point exceeding the predefined time threshold, the current behavior recognition type is obtained as the intent recognition result. The dwell time of the user at the current position point needs to be calculated based on the timestamp of the current position point and the timestamp of the previous position point, and compared with the predefined time threshold. If the dwell time of the user at the current position point exceeds the predefined time threshold, and the current behavior type is consistent with the previous behavior type, it may be considered that the behavior intention of the user is recognized. In this case, the current behavior type is used as the intent recognition result.

More specifically, the position point of the user position trajectory is combined with the dwell time to increase the accuracy of region determination.

As shown in FIG. 4, if a user stays at point E for time t without any operation, but performs an operation at the next position F, it indicates that there is an operation intention of position F at position E. It can be determined whether a point belongs to a region of the operation after drawing the region map for multiple times. If it is an isolated point, the isolated point is discarded. If a point is surrounded by the operation region of the point F, the point also belongs to the region. Compared with the traditional calibration region, the region of this solution draws a map according to the actual behavior of the user, which is more accurate and practical.

In this embodiment, through the foregoing solution, based on the predefined behavior region map, the user position set is obtained according to the user position trajectory. The user position set is input into the intent recognition model for the intent recognition to obtain the intent recognition result. The intent recognition may be performed based on the user position trajectory, so that the specific behavior intention of the user is known, and used to guide the decision and execution of the vehicle control, therefore, providing more intelligent and personalized interaction experience.

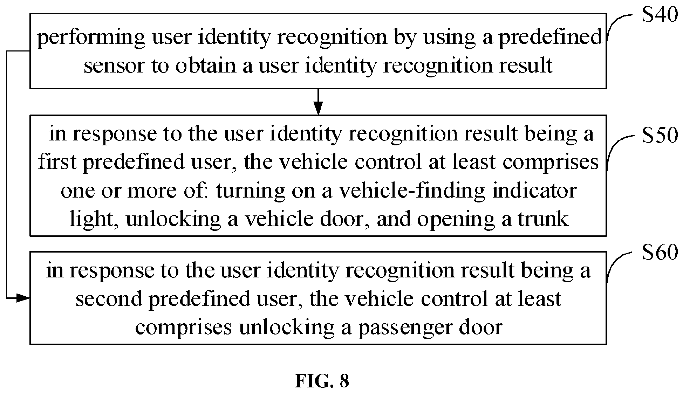

Referring to FIG. 8, which is a schematic flowchart of a vehicle control method according to a fourth exemplary embodiment of the present disclosure.

Based on the first embodiment, a fourth embodiment of the present disclosure is provided, and the fourth embodiment of the present disclosure differs from the first embodiment in the following.

In this embodiment, the vehicle control method further includes S40 to S60.

S40, user identity recognition is performed by using a predefined sensor to obtain a user identity recognition result.

S50, in response to the user identity recognition result being a first predefined user, the vehicle control at least includes one or more of: turning on a vehicle-finding indicator light, unlocking a vehicle door, and opening a trunk.

S60, in response to the user identity recognition result being a second predefined user, the vehicle control at least includes unlocking a passenger door.

In particular, first, the user identity recognition is performed by using the predefined sensor to obtain the user identity recognition result. The identity verification may be performed on the user by using the predefined sensor, for example, a technology such as facial recognition or voiceprint recognition. Or the identity recognition may be performed by a network authorization and a signal such as Bluetooth or a radio frequency. By comparing the biometric feature or other identity information of the user, the identity of the user can be determined, and the user identity recognition result can be obtained to perform the vehicle control for different user identities.

Then, in response to the user identity recognition result being the first predefined user, the vehicle control at least comprises one or more of: turning on the vehicle-finding indicator light, unlocking the vehicle door, and opening the trunk. The first predefined user indicates a user with a predefined identity. The actual identity of the first predefined user may be an owner identity predefined in a vehicle-mounted terminal or a vehicle APP, etc., that is, it is determined whether the identity of the user is the vehicle owner. If the user identity recognition result is the vehicle owner, the vehicle control may continue to be performed based on the intent recognition result. For example, if the user identity recognition result is the vehicle owner, based on the user intention, vehicle control with authority such as turning on a vehicle-finding indicator light, unlocking/opening a driver door or all of the vehicle doors, starting an engine, and opening a trunk may be performed. That is, the first predefined user has an advanced vehicle control authority of the vehicle. A further distinguishing can be made in combination with the vehicle owner and other vehicle users, to realize personalized services.

Finally, in response to the user identity recognition result being a second predefined user, the vehicle control at least comprises unlocking a passenger door. The second predefined user indicates a user with another predefined identity. The actual identity of the second predefined user may be a passenger identity predefined in a vehicle-mounted terminal or a vehicle APP, etc., that is, it is determined whether the identity of the user is the passenger. If the user identity recognition result is the passenger identity, the vehicle control with authority, such as unlocking/opening a passenger door or all of the vehicle doors, and opening a trunk, may continue to be performed based on the user intention. That is, the second predefined user has a lower-level control authority of the vehicle, and a user with authorization may change the authority of the second predefined user for vehicle control through the authorization setting. In addition, when the user identity recognition fails, that is, the user is not an authorized user of the vehicle, and does not have authority to control the vehicle.

In this embodiment, through the foregoing solution, user identity recognition is performed by using a predefined sensor to obtain a user identity recognition result. In response to the user identity recognition result being a first predefined user, the vehicle control at least comprises one or more of: turning on a vehicle-finding indicator light, unlocking a vehicle door, and opening a trunk; in response to the user identity recognition result being a second predefined user, the vehicle control at least comprises unlocking a passenger door. The identity of the user is verified before performing the vehicle control, and different vehicle control operations can be performed only after different identities of the user are confirmed, thereby ensuring the safety of the vehicle and the validity of the use authority.

In addition, an embodiment of the present disclosure further provides a vehicle control apparatus, where the vehicle control apparatus includes:
an acquiring module, configured to acquire a user position trajectory of a predefined user outside a vehicle;
a recognition module, configured to perform, based on a pre-trained intent recognition model, intent recognition according to the user position trajectory, to obtain an intent recognition result, where the intent recognition model is obtained by performing model training based on a pre-obtained historical user trajectory set and a pre-obtained historical user behavior set; and
a control module, configured to perform vehicle control based on the intent recognition result.

For a principle and an implementation process of implementing the vehicle control in this embodiment, refer to the foregoing embodiments, and details are not described herein again.

Additionally, an embodiment of the present disclosure further provides a terminal device, including: one or more memories, one or more processors, and a vehicle control program stored on the one or more memories and executable on the one or more processors, when the vehicle control program is executed by the one or more processors, the steps of the vehicle control method described above are implemented.

Since all the technical solutions of all the foregoing embodiments are adopted when the vehicle control program is executed by the one or more processors, it has at least all the beneficial effects brought by all the technical solutions of all the foregoing embodiments, which will not be repeated here.

Additionally, an embodiment of the present disclosure further provides a computer-readable storage medium storing a vehicle control program, and when the vehicle control program is executed by one or more processors, the steps of the vehicle control method described above are implemented.

Since all the technical solutions of all the foregoing embodiments are adopted when the vehicle control program is executed by the one or more processors, it has at least all the beneficial effects brought by all the technical solutions of all the foregoing embodiments, which will not be repeated here.

Compared with the prior art, the vehicle control method, apparatus, terminal device and storage medium are provided in embodiments of the present disclosure. A user position trajectory of a predefined user outside a vehicle is acquired. Based on a pre-trained intent recognition model, intent recognition is performed according to the user position trajectory, to obtain an intent recognition result. Where the intent recognition model is obtained by performing model training based on a pre-obtained historical user trajectory set and a pre-obtained historical user behavior set. Vehicle control is performed based on the intent recognition result. Based on the seamless vehicle control for the user intention, the solution effectively solves the problem of poor user experience resulting from vehicle control that does not adapt to user intention, improves the accuracy and convenience of the seamless vehicle control.

It should be noted that, in this specification, the terms "include", "comprise", or any other variants thereof are intended to cover non-exclusive inclusion, so that a process, method, article, or system that includes a series of elements includes not only those elements, but also other elements that are not explicitly listed, or elements inherent to such process, method, article, or system. Without more limitations, an element defined by "including one ......" does not preclude the presence of additional identical elements in the process, method, article, or system that includes the element.

The foregoing sequence numbers of the embodiments of this disclosure are merely for description, and do not represent advantages and disadvantages of the embodiments.

Through the description of the above embodiments, those skilled in the art can clearly understand that the methods of the above embodiments can be implemented by software and a necessary general hardware platform, and of course, can also be implemented by hardware, but in many cases, the former is a better implementation. Based on such understanding, the technical solutions of the present disclosure essentially or the part contributing to the prior art may be embodied in the form of a software product. And the computer software product is stored in a storage medium (such as ROM/RAM, magnetic disk, optical disk) as described above, including several instructions to enable a terminal device (which may be a mobile phone, a computer, a server, or a network device, etc.) to perform the methods described in various embodiments of the present disclosure.

The above are only preferred embodiments of the present disclosure and do not limit the patent scope of the present disclosure. Any equivalent structure or equivalent process transformation made by using the contents of the specification and drawings of the present disclosure, or directly or indirectly applied to other related technical fields, are all included in the patent protection scope of the present disclosure.

## Claims

1. A vehicle control method, comprising:
acquiring a user position trajectory of a predefined user outside a vehicle;
performing, based on a pre-trained intent recognition model, intent recognition according to the user position trajectory, to obtain an intent recognition result, wherein the intent recognition model is obtained by performing model training based on a pre-obtained historical user trajectory set and a pre-obtained historical user behavior set; and
performing vehicle control based on the intent recognition result.

2. The vehicle control method according to claim 1, wherein the acquiring the user position trajectory of the predefined user outside the vehicle comprises:
acquiring, by a built-in sensor of the vehicle, position trajectory data of the user outside the vehicle to form the user position trajectory, wherein the position trajectory data is transmitted by a device having a signal transmitting and receiving capability.

3. The vehicle control method according to claim 1, wherein the acquiring the user position trajectory of the predefined user outside the vehicle comprises:
acquiring positioning information of an authorized user outside the vehicle through Internet of Vehicles, to form the user position trajectory.

4. The vehicle control method according to claim 1, wherein before the performing, based on the pre-trained intent recognition model, the intent recognition according to the user position trajectory, to obtain the intent recognition result, the method further comprises:
constructing an initial intent recognition model based on a predefined intent recognition algorithm; and
performing the model training on the initial intent recognition model based on the pre-obtained historical user trajectory set and the pre-obtained historical user behavior set, to obtain the intent recognition model.

5. The vehicle control method according to claim 4, wherein the performing the model training on the initial intent recognition model based on the pre-obtained historical user trajectory set and the pre-obtained historical user behavior set, to obtain the intent recognition model comprises:
constructing a behavior region map set based on the pre-obtained historical user trajectory set and the pre-obtained historical user behavior set; and
inputting the behavior region map set into the initial intent recognition model for the model training to obtain the intent recognition model.

6. The vehicle control method according to claim 5, wherein the constructing the behavior region map set based on the pre-obtained historical user trajectory set and the pre-obtained historical user behavior set comprises:
obtaining user behavior types based on the pre-obtained historical user behavior set;
classifying the pre-obtained historical user trajectory set based on the user behavior types to obtain a behavior trajectory set;
performing region calibration based on the behavior trajectory set to obtain a behavior region set; and
mapping the behavior region set to a predefined vehicle perception map to obtain the behavior region map set.

7. The vehicle control method according to claim 1, wherein the performing, based on the pre-trained intent recognition model, the intent recognition according to the user position trajectory, to obtain the intent recognition result comprises:
obtaining, based on a predefined behavior region map, a user position set according to the user position trajectory; and
inputting the user position set into the intent recognition model for the intent recognition to obtain the intent recognition result.

8. The vehicle control method according to claim 7, wherein the obtaining, based on the predefined behavior region map, the user position set according to the user position trajectory comprises:
mapping the user position trajectory to a corresponding behavior region based on the predefined behavior region map, to obtain user position information in different behavior regions to form the user position set.

9. The vehicle control method according to claim 7, wherein the inputting the user position set into the intent recognition model for the intent recognition to obtain the intent recognition result comprises:
forming a continuous position trajectory curve based on position points in the user position set, and recognizing, by using a recognition algorithm, whether the continuous position trajectory curve conforms to a characteristic position curve of a specific behavior intention, to obtain the intent recognition result.

10. The vehicle control method according to claim 7, wherein the inputting the user position set into the intent recognition model for the intent recognition to obtain the intent recognition result comprises:
determining associations between different position points based on attribute features of the position points in the user position set, and performing the intent recognition to obtain the intent recognition result.

11. The vehicle control method according to claim 7, wherein the inputting the user position set into the intent recognition model for the intent recognition to obtain the intent recognition result comprises:
inputting the user position set into the intent recognition model for:
obtaining a current position point and a previous position point based on the user position set;
obtaining a current behavior type and a previous behavior type based on behavior types corresponding to the current position point and the previous position point in the predefined behavior region map; and
in response to the current behavior type being consistent with the previous behavior type and dwell time at the current position point exceeding a predefined time threshold, obtaining the current behavior recognition type as the intent recognition result.

12. The vehicle control method according to any one of claims 1 to 11, further comprising:
performing user identity recognition by using a predefined sensor to obtain a user identity recognition result;
wherein in response to the user identity recognition result being a first predefined user, the vehicle control at least comprises one or more of: turning on a vehicle-finding indicator light, unlocking a vehicle door, and opening a trunk;
in response to the user identity recognition result being a second predefined user, the vehicle control at least comprises unlocking a passenger door.

13. A vehicle control apparatus, comprising:
an acquiring module, configured to acquire a user position trajectory of a predefined user outside a vehicle;
a recognition module, configured to perform, based on a pre-trained intent recognition model, intent recognition according to the user position trajectory, to obtain an intent recognition result, wherein the intent recognition model is obtained by performing model training based on a pre-obtained historical user trajectory set and a pre-obtained historical user behavior set; and
a control module, configured to perform vehicle control based on the intent recognition result.

14. A terminal device, comprising: one or more memories, one or more processors, and a vehicle control program stored on the one or more memories and executable on the one or more processors, wherein the vehicle control program is configured to implement steps of the vehicle control method according to any one of claims 1 to 12.

15. A storage medium storing a vehicle control program, and when the vehicle control program is executed by one or more processors, steps of the vehicle control method according to any one of claims 1 to 12 are implemented.
